# EUROPEAN PATENT APPLICATION

(11) **EP 4 198 662 A1**
(43) Date of publication of application: **21.06.2023**
(21) Application number: 21215106.2
(22) Date of filing: 16.12.2021
(51) Int. Cl.: G05B 19/418

(54) **AN ELECTRONIC DEVICE FOR KEEPING TRACK OF ASSEMBLY PARAMETERS OF TRANSPORTABLE TEXTILE ASSEMBLIES OF A SPINNING MILL AND A METHOD FOR KEEPING TRACK OF THE SAME**

(71) Applicant: Maschinenfabrik Rieter AG, 8406 Winterthur (CH)
(72) Inventor: GEHRING, David, 8444 Henggart (CH); WIRTH, Andreas, 8704 Herrliberg (CH); PATIL, Nitin T., 8406 Winterthur (CH); OCCHI, Lorenzo, 8330 Pfäffikon (CH); ÜDING, Michael, 85049 Ingolstadt (DE); HÄRDI, Rudolf, 5273 Oberhofen AG (CH); CARIDE, Miguel, 1033 Cheseaux-sur-Lausanne (CH)

(57) **Abstract**

The disclosure relates to an electronic device (1) and a method for keeping track of assembly parameters (pa, pb, ...) of transportable textile assemblies (y1, y2, ...) of a spinning mill (20). The electronic device (1) is configured to receive parameter data for determining assembly parameters (pa, pb, ...) of transportable textile assemblies (y1, y2,

...) while being arranged at initial locations (o1). The electronic device (1) is configured to receive image data of a room view (90) of the spinning mill (20) for tracking locations (o1', o1") of transportable textile assemblies (y1, y2, ...) during their transportation for keeping track of assembly parameters (pa, pb, ...) of transportable textile assemblies (y1, y2, ...).

## Description

### Field of invention

The present disclosure relates to an electronic device for keeping track of assembly parameters related to transportable textile assemblies of a spinning mill, and to a method for keeping track of assembly parameters related to transportable textile assemblies of a spinning mill.

### Description of related art

Spinning mills are designed to convert natural and man-made fibers and their blends into yarns of desired quantities and qualities. For this purpose, fibrous textile material is processed by a sequence of textile machines. Upstream textile machines receive textile material of a certain quantity and quality and produce textile material of another quantity and quality for further processing by downstream textile machines. Textile material can be arranged in the form of transportable textile assemblies, such as bales with raw fibers (e.g., cotton bales), cans filled with sliver or roving, laps with sliver, bobbins with roving, cops or bobbins with wound yarn, etc. For processing textile material by respective textile machines, the transportable textile assemblies can be transported to respective textile machines, such as bales with raw fibers which can be transported from a raw material warehouse to a bale opener in a blow room, cans or containers with sliver or roving which can be transported to draw frames or spinning machines, cops or bobbins with wound yarn which can be transported to winder machines, etc. Transportation of the transportable textile assemblies can be based on automatic, semi-automatic, and/or manual transport systems.

For example, an upstream card machine can receive fibers in a continuous manner and produce a sliver, which sliver is coiled in a can for temporal storage, which subsequently may be transported arranged on a trolley or rollers by e.g., a worker or an automated guided vehicle (AGV) to a downstream draw frame. The draw frame can receive the sliver from the can (or from multiple such cans) and produce drawn sliver, which drawn sliver is coiled in a can for temporal storage which subsequently may be transported arranged on a trolley or rollers by e.g., a worker or an automated guided vehicle (AGV) to a downstream speed frame machine. A speed frame machine can receive draw sliver and produce roving, which roving can be wound on tubes that can be transported with overhead conveyors to downstream spinning machines, which receive roving from the tubes for producing spun yarn. Spun yarn can be wound on cops for transportation to further downstream textile machines, such as winder machines which receive spun yarn from the cops for producing yarn bobbins (or packages) with rewound yarn.

At upstream textile machines, textile material of a predefined quantity and quality is received for producing textile material of a desired quantity and quality. At downstream textile machines, assembly parameters of transportable textile assemblies for receiving textile material produced at upstream textile machines must be known for correctly adjust downstream textile machines for producing textile material of a desired quantity and quality. In addition, tracking and storing the assembly parameters along the processing chain in a spinning mill is necessary for quality control.

For example, machine parameters of upstream speed frame machines can be adjusted to produce large quantities of roving of moderate quality. Machine parameters at downstream spinning machines, which receive these large quantities of roving of moderate quality, must be adjusted accordingly for enabling production of spun yarn of a desired quantity and quality. For example, a machine parameter such as a drafting ratio or rotation speed must be adjusted to a different level for roving of moderate quality than for roving of high quality to prevent yarn breakage or obtain yarn hairiness that meets specified quality values.

Assembly parameters of transportable textile assemblies can relate to machine parameters of the textile machine which produced/processed the textile material, to material parameters of the textile material e.g., relating to a quantity, a quality, etc. of the textile material obtained by laboratory measurements (e.g. breaking strength, moisture content etc.) or by online measurements (e.g. sensors of a draw frame, spindle monitor of a ring spinning machine, yarn monitor of a winding machine), to a production date and time, delivery date and time, feeding date and time, etc.

By tracking and storing the assembly parameters along the processing chain, it is possible to know the starting material and the individual processing steps along the transport chain for a yarn produced as part of quality control. This enables compliance with specifications for e.g., starting materials to be monitored or the origin of impurities or processing errors to be determined.

Spinning mills include large numbers of textile machines with large numbers of processing positions, and complex transport systems are employed for transporting transportable textile assemblies from upstream textile machines to downstream textile machines.

It is difficult to keep track of assembly parameters of transportable textile assemblies.

US5287692A discloses in a transport medium for yarn or the like which comprises a medium for transporting directly or indirectly a yarn or the like, such as a tray for fitting upright a bobbin thereon, and media capable of writing therein and reading therefrom of various information on the yarn, the media attached to the transporting medium.

WO2020229295A1 relates to a textile machine with a plurality of processing stations each drawing off and treating one yarn from a feed spool. The feed spools are held in a plurality of feed stations, which are arranged in tiers within a creel rack. Each of the feed spools has a machine-readable label. According to the invention, in order to be able to access the product data for the feed spools when processing the yarns in the processing stations, the label on the feed spools takes the form of an RFID tag, wherein at least one RFID antenna connected to a read unit is allocated to the feed stations for each tier.

### Brief summary of the invention

There may be a need for an electronic device for keeping track of assembly parameters of transportable textile assemblies of a spinning mill, and for a method for keeping track of assembly parameters of transportable textile assemblies of a spinning mill.

Such a need may be met by the subject-matter of the independent claims. Advantageous embodiments are defined in the dependent claims.

An aspect of the invention relates to an electronic device for keeping track of assembly parameters of transportable textile assemblies of a spinning mill. The electronic device being configured: to receive parameter data for determining assembly parameters of transportable textile assemblies while being arranged at initial locations; and to receive image data of a room view of the spinning mill for tracking locations of transportable textile assemblies during their transportation for keeping track of assembly parameters of transportable textile assemblies. For example, while transportable textile assemblies are produced at upstream textile machines, the electronic device determines and stores their assembly parameters. When transporting transportable textile assemblies from upstream textile machines to downstream textile machines, image data of a room view of the spinning mill is received for tracking locations of transportable textile assemblies. For example, image data is received from one or more cameras arranged at predetermined locations within the spinning mill. For example, image data is received continuously for continuously tracking locations of transportable textile assemblies. Thus, irrespective of transport paths, upon arrival of transportable textile assemblies at downstream textile machines, transmitting assembly parameters to downstream textile machines is enabled, for example for adjusting machine parameters in accordance with assembly parameters of transportable textile assemblies. The spinning mill is simplified because contrary to the prior art no writer and reader devices (at each processing position of a textile machine a respective device is required) and no media attached to transporting media (each transporting media requires a respective medium) are required for writing and reading information on intermediate products and yarn. However, according to certain variations of the present invention, optically visible media may also be used in a complementary manner, as will be explained in more details below.

In some embodiments, the electronic device is configured to receive image data of multiple room views of a spinning mill, such as image data provided by a plurality of cameras capturing image data of more or all possible locations of the spinning mill. Thus, accuracy of captured image data can be improved (e.g. by balancing different views of the same location, using redundant image data). Likewise, spinning mills with low room heights or that extend over several separate rooms, as well as areas between machines, can be monitored in this way.

Thus, in particular the present invention makes it possible to reliably detect the positioning of a transportable material assembly at a specific processing position of a textile machine at a specific point in time, without having to provide individual sensors at each textile machine or even at each of the many individual processing positions - as well as matching media on the transportable material assemblies. The cost of setting up a material tracking system within a spinning mill can thus be reduced significantly, and even retrofitting of existing spinning mills with an electronic device according to the invention can be carried out very easily.

In some embodiments, the electronic device comprises at least one camera, that is mounted at a predetermined location at an elevated position in a spinning mill, e.g. under the ceiling. In this way, a room view of a large portion of the spinning mill can be covered by a low number of cameras.

In some embodiments, the electronic device comprises at least one image capture device that is rotatable so that room views can be captured in various directions. For certain spinning mills, it may be advantageous if a room view is obtained by at least one image capture device is movable in space, making viewpoint variation possible. For certain spinning mills, it may be advantageous if the electronic device is configured to obtain a room view by at least one image capture device that is movable in space so that viewpoint variation is possible. In this way, the number of image capture devices can be reduced and/or movements in certain areas of the spinning mill can be captured with higher accuracy, at least temporarily. In some embodiments, an image capture device to obtain a room view can be moved, for example, by means of a permanently installed mechanism or a swivel lever. In some embodiments, an image capture device to obtain a room view is mounted on an unmanned vehicle, such as a unmanned ground vehicle or a unmanned aerial vehicle.

In some embodiments, assembly parameters of transportable textile assemblies relate to one or more of machine parameters of textile machines having produced the transportable textile assemblies, quality parameters of textile material, quantity parameters of textile material, environmental parameters of the spinning mill (e.g. temperature and humidity at certain locations within the spinning mill), and production date and time. For example, assembly parameters are determined during or upon completion of production of transportable textile assemblies at textile machines and are transmitted via signal lines, in particular computer networks, to the electronic device. For example, machine parameters and/or sensor information of sensors attached to textile machines are used for determining assembly parameters of transportable textile assemblies. Assembly parameters of transportable textile assemblies can also be measurement results from a textile laboratory, in particular those based on material probes of the textile assembly.

Within the context of the present invention signal lines can be wired or wireless signal lines.

In some embodiments, initial locations relate to one or more of places of delivery of transportable textile assemblies, and places of production of transportable textile assemblies. For example, initial locations relate to a raw material warehouse having stored bales with raw fibrous material. For example, initial locations relate to processing positions of textile machines, such as a coiling station of a draw frame where sliver is delivered into a can, establishing a transportable textile assembly.

In some embodiments, image data of a room view of the spinning mill includes one or more of still image data, and movie image data (at low or high frequency). For example, a first still image is captured upon completion of a production of a transportable textile assembly at an upstream textile machine, and a second still image is captured upon detection of the arrival of a transportable textile assembly at a downstream textile machine for tracking from which processing positions of upstream textile machines to which processing positions of downstream textile machines transportable textile assemblies are transported. For example, movie image data enables continuously tracking locations of transportable textile assemblies.

In some embodiments, tracking locations of transportable textile assemblies includes analyzing image data of a room view of the spinning mill with computer vision techniques, such as classification, (multiple) object detection, (multiple) object tracking, semantic segmentation, instance segmentation, etc. Computer vision techniques are widely available and enable robust tracking of locations of objects of any size, shape, color, etc., such as transportable textile assemblies of a spinning mill. Such type of tracking by computer-vision based object tracking allows transportable textile assemblies to be tracked without any pre-known visible unique features such as barcodes. Moreover, such a system works even if a tracked transportable textile assembly changes its orientation during transport (e.g a can that rotates around its central axis) and, for example, originally visible features of the object become invisible. Reliable real-time tracking by detection of transportable textile assemblies may be obtained if object detection is performed on image data of a room view using neural networks. Various algorithms are known for this purpose, such as based on "YOLO" as proposed by Red-mon et al. (available from arXiv:1506.02640).

In some embodiments, tracking locations of transportable textile assemblies includes tracking individual features of transportable textile assemblies, in particular one or more of a pattern of textile material, a visual code, and a color. For example, upon completion of a transportable textile assembly in the form of can or container having arranged sliver produced at a draw frame machine, from a view from the top, the sliver has an individual shape (pattern of laying) which supports tracking the can or container. For example, the transportable textile assemblies have attached a visual code in the form of a one- or two-dimensional bar code with or without individual colors for supporting tracking their locations. Alternatively, or in addition, Alternatively, or in addition, visible signs of use (e.g. superficial contamination, surface abrasion, dents) of transport containers can also be included in tracking locations of transportable textile assemblies. In some embodiments, tracking locations of transportable textile assemblies includes tracking of single or multiple patterned tapes and/or colored tapes attached to a transportable textile assembly. Such tapes are already used in some spinning mills to visibly mark cans for (human) operators. In some embodiments, tracking locations of transportable textile assemblies includes tracking of three-dimensional features, such as a laydown pattern of a textile material or a a three-dimensional mechanical structure comprising at least three visual markings, the markings preferably reflecting and/or emitting electromagnetic radiation of at least a certain wavelength, which are fixedly arranged at a fixed distance and at a fixed angle to one another. A laydown pattern of a textile material may e.g. be a three-dimensional winding pattern of a yarn or roving on a bobbin or, for example, a three-dimensional deposit pattern generated by a coiler of a sliver or roving in a can.

In some embodiments, the electronic device includes a database containing information on the appearance and/or spatial dimensions of typical transportable textile assemblies to be expected in a spinning mill, and tracking locations of transportable textile assemblies includes analysis of the image data of a room view using this information to identify and/or precisely locate the transportable textile assemblies. In embodiments where the electronic device is configured to use real-time tracking by object detection using artificial intelligence, preferably neural networks is performed, good results may be obtained if pre-trained models are used to reliably detect certain types of transportable textile assemblies. Alternatively, or in addition, the electronic device may provide the option for at least temporary spinning-mill-specific training of such a neural network, thereby improving the accuracy and reliability for tracking the locations of transportable textile assemblies. If the room view is at least partially captured by a moving image capture device, the electronic device preferably has enhanced domain adaptation capability and dynamic receptive fields.

In some embodiments, the electronic device includes a database containing topological information of the spinning mill. Topological information of one or more spinning mill may relate to one or more of a location of a processing point of a textile machine (e.g. a delivery point for a sliver from a can), the position of the floor of the spinning mill, information on the (predefined and fixed) course of rails of an overhead conveyor and/or on the (predefined and fixed) course of a peg tray conveying cops from at least one ring spinning machine to at least one winding machine. By taking topological information of the spinning mill into account, the accuracy of tracking locations can be increased. Topological information may also refer to information such as that multiple transportable textile assemblies grouped together as a main assembly, when transported by e.g. an overhead conveyor, do not change position relative to each other within the main assembly during transport. Hence, in some embodiments, the electronic device may be configured to use such topological information for a plausibility check of the visually recorded positions of one or multiple transportable textile assemblies, or can be used during the position determination based on the image data to increase the efficiency and accuracy of this determination, since e.g., certain position courses can be assigned different probabilities based on the topology. In this way, the accuracy of tracking small objects and temporarily occluded objects can be greatly improved.

In some embodiments, tracking locations of transportable textile assemblies includes analyzing image data at predetermined time intervals. For example, in case of a large number of transportable textile assemblies in a predetermined area, or of transportable textile assemblies with a small shape, shorter time intervals enable improve tracking of their locations. For example, in case of a small number of transportable textile assemblies in a predetermined area, or of transportable textile assemblies with a large shape, longer time intervals simplify analysis of image data.

In some embodiments, tracking locations of transportable textile assemblies includes analyzing image data essentially continuously. For example, lookup of assembly parameters of transportable textile assemblies is enabled anytime, and adapting transportation of transportable textile assemblies to changes at downstream machines (e.g., a failure) is enabled.

In some embodiments, tracking locations of transportable textile assemblies includes analyzing image data upon receipt of a trigger signal relating to a transportable textile assembly being arranged at a predefined location. For example, for particular transportable textile assemblies (e.g., bales with fibrous material), image data is only analyzed upon detection of receipt of the transportable textile assemblies at a particular textile machine (e.g., a bale opener or other blow room machines).

The invention further relates to a distributed computer system for putting into practice an electronic device as described above. The distributed computer system comprises one or more computers, wherein preferably at least one of the one or more computers includes a graphical user interface. For example, sufficient processing power for analyzing image data is enabled. For example, use of existing computers of the spinning mill is enabled. According to some embodiments, at least one of the one or more computers are servers that providing a web-based graphical user interface.

According to some embodiments the electronic device is may also be integrated in a camera device, on a hardware board, a computer or a server.

The invention further relates to a method for keeping track of assembly parameters of transportable textile assemblies of a spinning mill. The method includes the steps executed by an electronic device or a distributed computer system of: receiving parameter data for determining assembly parameters of transportable textile assemblies while being arranged at initial locations; receiving image data of a room view of the spinning mill for tracking locations of transportable textile assemblies during their transportation for keeping track of assembly parameters of transportable textile assemblies.

In some embodiments, assembly parameters of transportable textile assemblies relate to one or more of machine parameters of textile machines having produced the transportable textile assemblies, quality parameters of textile material, quantity parameters of textile material, environmental parameters of the spinning mill, and production date and time.

In some embodiments, initial locations relate to one or more of places of delivery of transportable textile assemblies, and places of production of transportable textile assemblies.

In some embodiments, image data of a room view of the spinning mill includes one or more of still image data, and movie image data.

In some embodiments, tracking locations of transportable textile assemblies includes analyzing image data of a room view of the spinning mill with computer vision techniques.

### Brief description of drawings

The invention will be better understood with the aid of the description of an embodiment given by way of example an illustrated by the figures, in which:
Fig. 1 illustrates schematically an electronic device for keeping track of assembly parameters of transportable textile assemblies of a spinning mill;
Fig. 2 illustrates schematically a visual representation of keeping track of assembly parameters of transportable textile assemblies;
Fig. 3 illustrates schematically possible method steps of a method for keeping track of assembly parameters of transportable textile assemblies of a spinning mill.

### Detailed Description of the invention

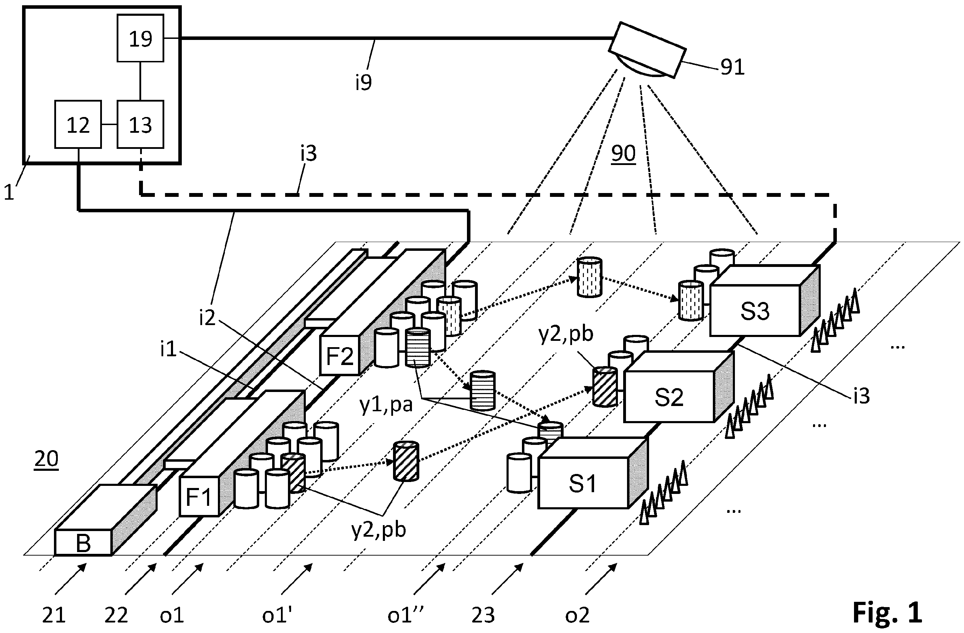

Fig. 1 illustrates schematically an electronic device 1 for keeping track of assembly parameters pa, pb, ... of transportable textile assemblies y1, y2, ... of a spinning mill 20.

In the following, the invention is explained for transportable textile assemblies y1, y2, ... for transporting roving from draw frame machines F1, F2, ... to spinning machines S1, S2, S3, ... (e.g., open end spinning machines). The draw frame machines F1, F2, ... are arranged upstream from the spinning machines S1, S2, S3, .... The spinning machines S1, S2, S3, ... are arranged downstream from the draw frame machines F1, F2, .... The transportable textile assemblies y1, y2, ... enable transportation of textile material produced by the upstream draw frame machines F1, F2, ... to the downstream spinning machines S1, S2, S3, ... for further processing of the textile material.

However, the invention is not only directed for keeping track of assembly parameters pa, pb, ... of transportable textile assemblies y1, y2, ... for transporting textile material from upstream draw frame machines F1, F2, ... to downstream spinning machines S1, S2, S3, ..., but to any kind of assembly parameters pa, pb, ... and any kind of transportable textile assemblies y1, y2, ... of a spinning mill 20 for transporting textile material from one location to another location. Thus, in some embodiments of the invention, the transportable textile assemblies y1, y2, ... relate to bales with textile material which are transportable from an initial location (e.g., in a raw material warehouse) to bale openers and/or other blow room machines; to cans or containers with textile material in the form of sliver or roving which are transportable from an initial location to spinning machines; to laps made from sliver which are transportable from an initial location to combing machines; to cops with textile material in the form of wound yarn which are transportable from an initial location to winder machines; to bobbins with textile material in the form of rewound yarn which are transportable from an initial location to a delivery system; to spools with textile material in the form of spooled yarn which are transportable from an initial location to textile machines; etc. In some embodiments, sets of transportable textile assemblies y1, y2, ... are arranged on common carrier devices, such as a plurality of cops arranged on carrier racks, peg trays, etc. Or a plurality of laps may be transported as an assembly to a comber machine on a trolley or a conveyor belt or an overhead conveyor. Or a plurality of bobbins with roving may by transported as an assembly along tracks of an overhead conveyor system to a ring spinning machine, etc.

The invention is directed to transportable textile assemblies y1, y2, ... having any configuration as regards size, shape, color, etc. For example, transportable textile assemblies y1, y2, ... relate to small or large cans or containers having arranged small or large amounts of sliver or roving, to small or large cops with small or large amounts of wound yarn, to small or large bobbins with small or large amounts of rewound yarn, etc. For example, transportable textile assemblies y1, y2, ... relate to cylindrical cans or containers, etc.

As illustrated schematically in Fig. 1, the spinning mill 20 includes various sections 21, 22, 23, .... Each section 21, 22, 23, ... of the exemplary embodiment of a spinning mill 20 illustrated schematically in Fig. 1 includes various textile machines. In typical embodiments, sections 21, 22, 23, ... of a spinning mill 20 include large numbers of textile machines, such as dozens of textile machines, wherein each textile machine can have large numbers of processing positions, such as hundreds or even thousands of processing positions, for receiving, processing and delivering textile material.

For example, as illustrated schematically in Fig. 1, a first section 21 of the spinning mill 20 relates to fiber preparation. For example, as illustrated schematically in Fig. 1, bale opener and/or other blow room textile machines B are arranged for processing raw cotton into chute matt. For example, as illustrated schematically in Fig. 1 by graphical symbols illustrated in the first section 21 but without reference signs, carding textile machines are arranged for processing chute matt into carded sliver.

For example, as illustrated schematically in Fig. 1, a second section 22 of the spinning mill 20 relates to spinning preparation. For example, breaker draw frame textile machines are arranged for processing carded sliver into break drawn sliver, finisher draw frame textile machines are arranged for processing break drawn sliver into finisher draw sliver, and speed frame textile machines are arranged for processing finisher draw sliver into roving. Spinning preparation at second section 22 is illustrated in Fig. 1 in a simplified manner with draw frame machines F1, F2, ... arranged at second section 22 for producing textile material in the form of roving.

For example, as illustrated schematically in Fig. 1, a third section 23 of the spinning mill 20 relates to ring spinning, compact spinning, rotor spinning, air-jet spinning, etc. For example, spinning machines S1, S2, S3, ... are arranged at the third section 23 for processing roving into cops with wound yarn.

For example, not illustrated in Fig. 1, further sections of the spinning mill 20 relate to automation, winding, texturing, palletizing (of yarn packages for transport to customers) etc. For example, winding textile machines are arranged for processing cops with wound yarn into yarn cones with rewound yarn.

Thus, for converting textile fibers such as raw cotton into yarn of a desired quantity and quality, textile material is received at upstream textile machines and processed at upstream textile machine into processed textile material. Processed textile material is transported to downstream textile machines for further processing by downstream textile machines. For example, transporting textile material to textile machines is based on duct systems, such as duct systems attached to blow room machines for transporting textile fibers to downstream textile machines. For example, transporting textile material to textile machines, such as to upstream textile machines at a start of the spinning mill 20 or from upstream textile machines to downstream machines, is based on transportable textile assemblies y1, y2, ..., such as bales, cops, bobbins, spools, etc. with textile material and with a transportable form. For example, transport systems are arranged for transporting transportable textile assemblies y1, y2, ..., which transport systems include trolleys, cars, rail systems, etc. For example, transport systems for transporting transportable textile assemblies y1, y2, ... are operated automatically, semi-automatically, or manually.

For example, as illustrated schematically in Fig. 1, sliver is produced at draw frame machines F1, F2, ... which are arranged at the second section 22 of the spinning mill 20. Sliver produced by the draw frame machines F1, F2, ... is arranged at initial locations o1 in transportable textile assemblies y1, y2, ..., such as coiled in cans or containers. Thus, transportable textile assemblies y1, y2, ... are provided at initial locations o1 which have the form of sliver arranged in cans or containers. The transportable textile assemblies y1, y2, ... are transported from initial locations o1 to different locations o1', o1", for example from initial locations o1 via intermediate locations o1' to destination locations o1". For example, after transporting transportable textile assemblies y1, y2, ... to destination locations o1", textile material of transportable textile assemblies y1, y2, ... is received at spinning machines S1, S2, S3, ... arranged at the third section 23 for producing bobbins (or packages) with wound yarn from sliver. For example, transportable textile assemblies y1, y2, ... relate to cans, containers, etc. which can be automatically, semi-automatically or manually transported from initial locations o1 to different locations o1', o1" of the spinning mill 20. For example, for transportation of the transportable textile assemblies y1, y2, ..., transport systems based on trolleys, cars, rail systems, etc. are involved. It is also conceivable that transportable textile assemblies y1, y2, ... are at least occasionally manually carried by a worker (e.g., larger yarn packages).

Transportable textile assemblies y1, y2, ... have respective assembly parameters pa, pb, ... as disclosed in the following.

For example, at second section 22, draw frame machines F1, F2, ... produce transportable textile assemblies y1, y2, ... in the form of cans or containers having arranged sliver. For example, assembly parameters pa, pb, ... of transportable textile assemblies y1, y2, ... relate to machine settings of the draw frame machines F1, F2, ..., to a quality of the sliver, to a quantity of the sliver, etc.

In some embodiments, assembly parameters pa, pb, ... relate to machine settings of respective textile machine, such as in case of draw frame machines F1, F2, ... to a coiler speed, a can plate speed, a suction intensity, a delivery speed, etc. In some embodiments, assembly parameters pa, pb, ... relate to measured or estimated material parameters of the textile material, such as in case of draw frame machines F1, F2, ... to a quality measure of a produced sliver, a quantity of produced sliver, etc. In some embodiments, assembly parameters pa, pb, ... relate to environmental parameters measured or estimated at textile machines, such as an air temperature, air humidity, etc. In some embodiments, assembly parameters pa, pb, ... relate to a production date and time. In some embodiments, assembly parameters pa, pb, ... relate to other parameters related to textile machines or produced textile material.

In some embodiments, assembly parameters pa, pb, ... of transportable textile assemblies y1, y2, ... depend on the type of transportable textile assemblies y1, y2, .... In some embodiments, the type of transportable textile assemblies y1, y2, ... relates to bales with raw cotton, cans or containers with sliver, cops with wound yarn, bobbins with rewound yarn, spools with spooled textile material, etc. For example, bales with raw cotton assembly parameters pa, pb, ..., e.g., a quality of raw cotton, etc., which are different from assembly parameters pa, pb, ... of cops with wound yarn, e.g., a quality of spun and wound yarn.

As illustrated schematically in Fig. 1, in some embodiments, textile machines B, F1, F2, ..., S1, S2, S3, ... arranged at sections 21, 22, 23, ... of the spinning mill 20 are controlled and monitored on the basis of signal lines i1, i2, i3. For example, the textile machines B, F1, F2, ..., S1, S2, S3, ... include control devices (not illustrated) for receiving via signal lines i1, i2, i3 control signals, for example for adjusting machine parameters of the textile machines B, F1, F2, ..., S1, S2, S3, .... For example, control devices (not illustrated) of the textile machines B1, F1, F2, ..., S1, S2, S3, ... are configured to transmit monitor signals via signal lines i1, i2, i3, for example for transmitting sensor signals from the textile machines B1, F2, F2, ..., S1, S2, S3, ..., such as sensor signals relating to quality parameters, quantity parameters, etc. of produced textile material. For example, signal lines i1, i2, i3 enable transmission of respective signals between the textile machines B, F1, F2, ..., S1, S2, S3, ... and a control center (not illustrated in Fig. 1) of the spinning mill 20. For example, a first signal line i1 is arranged for controlling and monitoring a bale opener and/or other blow room machines B of the first section 21, a second signal line i2 is arranged for controlling and monitoring draw frame machines F1, F2, ... of the second section 22, a third signal line i3 is arranged for controlling and monitoring spinning machines S1, S2, S3, ... of the third section 23, etc.

In some embodiments, the electronic device 1 according to the invention, the control center (not illustrated) of the spinning mill 20, control devices (not illustrated) of the textile machines B, F1, F2, ..., S1, S2, S3, ..., etc. relate to computerized devices, such as microcontrollers, computers, computer systems, etc. For example, the computerized devices include one or more processors and program instructions stored in a memory, which program instructions, when executed by the one or more processors, provide the functions as described in the present disclosure. For example, the computerized devices include user interfaces such as graphical user interfaces (GUI) for enabling displaying status information to an operator, for enabling receiving commands from an operator, etc. In some embodiments, the signal lines i1, i2, i3 relate to computerized networks. For example, the computerized networks relate to wired computer networks, wireless computer networks, etc. The computerized networks enable transmission of control signals, monitor signals, etc. between respective computerized devices.

For example, as illustrated schematically in Fig. 1, the electronic device 1 according to the invention is connected to the second signal line i2 of the second section 22. As illustrated schematically in Fig. 1 with a box with reference numeral 12, the electronic device 1 is configured to receive respective parameter data from draw frame machines F1, F2, .... For example, the electronic device 1 is configured to request parameter data from draw frame machines F1, F2, ... for receiving respective parameter data from draw frame machines F1, F2, ... for determining assembly parameters pa, pb, ... of transportable textile assemblies y1, y2, ... while being arranged at initial locations o1. The assembly parameters pa, pb, ... relate to above disclosed parameters, such as machine settings, quality parameters, quantity parameters, etc.

In some embodiments, the electronic device 1 is connected to the first signal line i1 of the first section 21 (not illustrated). For example, the electronic device 1 is configured to receive parameter data from textile machines arranged at the first section 21 for determining assembly parameters pa, pb, ... of transportable textile assemblies y1, y2, ....

In some embodiments, the electronic device 1 is connected to the third signal line i3 of the third section 23 (illustrated with dashed line). For example, the electronic device 1 is configured to transmit assembly parameters pa, pb, ... of transportable textile assemblies y1, y2, ... to textile machines arranged at the third section, and/or to receive parameter data for determining assembly parameters pa, pb, ... of transportable textile assemblies y1, y2, ....

In some embodiments, the electronic device 1 is connected via one or more signal lines to other electronic or computerized devices of the spinning mill 20. For example, the electronic device 1 is configured to receive parameter data from other electronic or computerized devices for determining assembly parameters pa, pb, ... of transportable textile assemblies y1, y2, ..., and/or to transmit assembly parameters pa, pb, ... to other electronic or computerized devices.

For example, as illustrated schematically in Fig. 1, the electronic device 1 according to the invention is connected via signal line i9 to a camera 91. For example, as illustrated schematically in Fig. 1, the camera 91 is configured to capture image data of a room view 90 of the spinning mill 20, and to transmit the captured image data via signal line i9 to the electronic device 1. The electronic device 1 is configured to receive electronic image data of a room view 90 of the spinning mill 20 for tracking locations o1', o1" of transportable textile assemblies y1, y2, ... during their transportation for keeping track of assembly parameters pa, pb, ... of transportable textile assemblies y1, y2, .... For example, the electronic device 1 and/or the camera 91 are configured to perform computer vision techniques for tracking locations o1', o1" of the transportable textile assemblies y1, y2, ... during their transportation. The signal line i9 can be wireless. Such an embodiment of the invention can be installed particularly easily in a spinning mill and is thus also suitable for retrofitting of a spinning mill.

The electronic device 1 according to the invention is configured to determine assembly parameters pa, pb, ... of transportable textile assemblies y1, y2, ... while being arranged at initial locations o1. For example, the electronic device 1 is configured to receive via signal line i2 from draw frame machines F1, F2, ... assembly parameters pa, pb, ... of transportable textile assemblies y1, y2, ... during and/or after production of transportable textile assemblies y1, y2, .... For example, as described above, assembly parameters pa, pb, ... can relate to machine settings of draw frame machines F1, F2, ..., to material parameters measured or estimated of produced textile material, etc.

The electronic device 1 according to the invention is configured to receive and analyze image data of a room view 90 of the spinning mill 20 for tracking transportable textile assemblies y1, y2, ... during their transportation from initial locations o1 to different locations o1', o1" for keeping track of assembly parameters pa, pb, ... of transportable textile assemblies y1, y2, .... For example, after receipt of assembly parameters pa, pb, ... of transportable textile assemblies y1, y2, ... arranged at locations o1, the electronic device 1 is configured to request and receive image data of a room view 90 of the spinning mill 20 via signal line i9 from the camera 91, and to analyze the received image data for tracking locations of transportable textile assemblies y1, y2, ... during their transportation to different locations o1', o1", which is illustrated in Fig. 1 with a box with reference numeral 19. Thus, by tracking locations o1', o1" of transportable textile assemblies y1, y2, ..., from which the electronic device 10 has received respective assembly parameters pa, pb, ... at initial locations o1, the electronic device 10 is configured to track assembly parameters pa, pb, ... of transportable textile assemblies y1, y2, ... of a spinning mill 20, as illustrated schematically in Fig. 1 with a box with reference numeral 13.

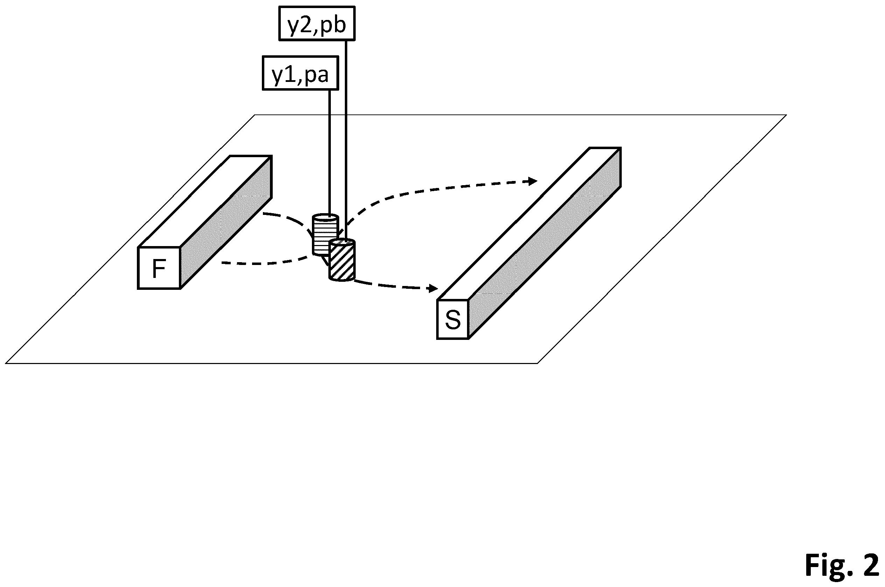

Fig. 2 illustrates schematically a visual representation of keeping track of assembly parameters pa, pb, ... of transportable textile assemblies y1, y2, .... As illustrated in Fig. 2, transportable textile assemblies y1, y2, ... are being transported from an upstream textile machine, such as a draw frame machine F, to a downstream textile machine, such as a spinning machine S. The electronic device 1 according to the invention enables to keep track of production parameters pa, pb, ... of transportable textile assemblies y1, y2, ... by linking the production parameters pa, pb, ... with the respective transportable textile assemblies y1, y2, ..., such as illustrated in Fig. 1 by linking production parameters with reference numeral pa with the transportable textile assembly with reference numeral y1, by linking production parameters with reference numeral pb with the transportable textile assembly with reference numeral y2, etc. During transportation of the transportable textile assemblies y1, y2, ..., the electronic device 1 according to the invention keeps track of respective production parameters. For example, upon arrival of transportable textile assemblies y1, y2, ... at downstream textile machines, such as the spinning machine S, downstream textile machines request respective production parameters pa, pb, ... from the electronic device 1 according to the invention, for example for adjusting machine parameters of downstream textile machines in accordance with respective production parameters pa, pb, ....

In some embodiments, the camera 91 relates to an omnidirectional (360-degree) camera, a high-speed camera, a light-field camera, a movie camera, a stereo camera, a time-of-flight camera, a video camera, etc., and/or any combination thereof. For example, the camera 91 is configured to capture image data of a room view 90 of the spinning mill 20 in the form of individual pictures, video streams, etc. It is evident that a room view does not have to encompass the entire spinning mill. In some embodiments, a plurality of cameras is arranged, e.g., for capturing image data of more or all possible locations of the spinning mill 20, for improving accuracy of captured image data (e.g., balancing different views of the same location, redundant image data, etc.), etc.

In some embodiments, for tracking locations o1', o1" of transportable textile assemblies y1, y2, ..., the electronic device 1 and/or the camera 91 include various computer vision techniques, such as image classification, object detection, object tracking, semantic segmentation, instance segmentation, etc.

For example, as illustrated schematically in Fig. 1, the electronic device 1 determines assembly parameters pa of a first transportable textile assembly y1 by requesting and receiving respective data from draw frame machine F2, during or after production of the first transportable textile assembly y1.

For example, after receipt of the assembly parameters pa of the first transportable textile assembly y1, the electronic device 1 receives image data of a room view 90 of the spinning mill 20 by requesting respective data from camera 91. For example, the electronic device 1 is configured to request and receive image data of a room view 90 of the spinning mill 20 in the form of a video stream. For example, the electronic device 1 is configured to analyze the video stream for determining locations o1', o1" of the first transportable textile assembly y1 during its transport from the upstream draw frame machine F1 to the downstream spinning machine S1, as illustrated schematically in Fig. 1 with a box with reference numeral 19.

Thus, the electronic device 1 is configured to track the assembly parameters pa of the first transportable textile assembly y1, because the assembly parameters pa have been received at initial location o1, and because the locations o1', o1" of the first transportable textile assembly y1 are tracked during transportation of the first transportable textile assembly y1.

In some embodiments, as illustrated schematically in Fig. 1 with dashed signal line i3, after arrival at location o1" of the first transportable textile assembly y1 at spinning machine S1, which is configured to process textile material of the first transportable textile assembly y1, the electronic device 1 is configured to transmit via signal line i3 assembly parameters pa of the first transportable textile assembly y1 to spinning machine S1, in particular for adjusting machine parameters of the spinning machine S1 according to the product parameters pa of the first transportable textile assembly y1.

In similar manner, as illustrated schematically in Fig. 1, the electronic device 1 receives assembly parameters pb of a second transportable textile assembly y2 when being arranged at initial location o1. The electronic device 1 tracks locations o1', o1" of the second transportable textile assembly y2 while being transported. The electronic device 1 detects arrival of the second transportable textile assembly at spinning machine S2. The electronic device 1 transmits assembly parameters pb of the second transportable textile assembly y2 to the spinning machine S2 after arrival of the second transportable textile assembly y2 at the spinning machine S2 for correctly adjust machine parameters of the spinning machine S2.

Fig. 2 illustrates schematically a visual representation of keeping track of assembly parameters pa, pb of transportable textile assemblies y1, y2. For example, at initial locations at draw frame machine F, the electronic device 1 receives assembly parameters pa, pb of transportable textile assemblies y1, y2. For example, the electronic device 1 stores the tuples y1,pa; y2,pb in a database. During transport of the transportable textile assemblies y1, y2 from the draw frame machine F to the spinning machine S, the electronic device 1 receives image data of a room view 90, and analyzes the received image data for tracking locations of the transportable textile assemblies y1, y2. For example, the electronic device 1 continuously tracks locations of transportable textile assemblies y1, y2. Accordingly, the electronic device 1 enables the visual representation of keeping track of assembly parameters pa, pb of transportable textile assemblies y1, y2 illustrated in Fig. 2, e.g., by continuously "attaching" the tuples y1,pa; y2,pb to respective transportable textile assemblies.

For example, the electronic device 1 enables to control transport systems such that downstream textile machines receive transportable textile assemblies y1, y2, ... at predefined locations or positions, e.g., which require predefined assembly parameters pa, pb, ....

For example, the electronic device 1 enables to control machine parameters of downstream textile machines in accordance with assembly parameters pa, pb, ... of transportable textile assemblies y1, y2, ... received at downstream textile machines.

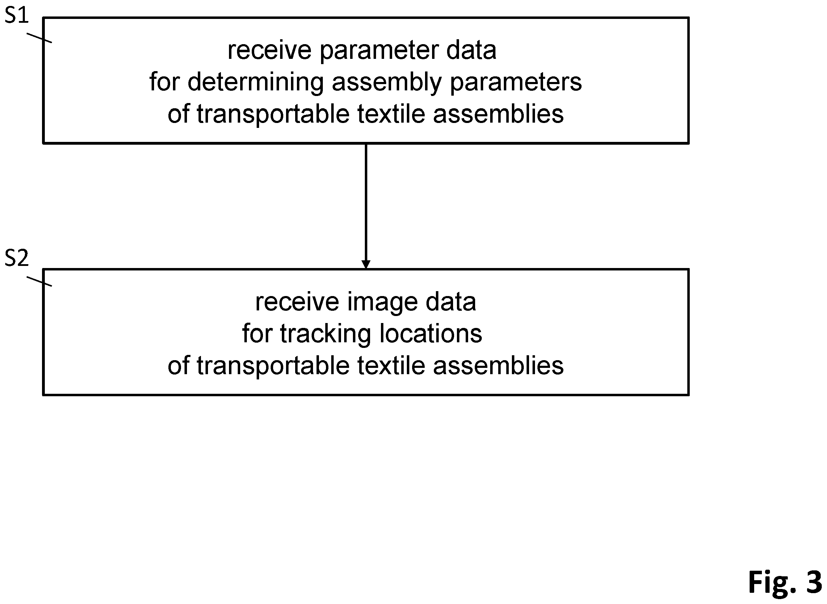

Fig. 3 illustrates schematically possible method steps of a method for keeping track of assembly parameters pa, pb, ... of transportable textile assemblies y1, y2, ... of a spinning mill 20. The method includes the steps executed by an electronic device 1 or a distributed computer system of: receiving parameter data for determining assembly parameters pa, pb, ... of transportable textile assemblies y1, y2, ... while being arranged at initial locations o1; receiving image data of a room view 90 of the spinning mill 20 for tracking locations o1', o1" of transportable textile assemblies y1, y2, ... during their transportation for keeping track of assembly parameters pa, pb, ... of transportable textile assemblies y1, y2, ....In some embodiments, the method is performed using an electronic device 1 as described above.

### Reference numerals/signs

- B: bale opener and/or blow room textile machines
- F1, F2, F: draw frame machines
- S1, S2, S3, S: spinning machines
- 20: spinning mill
- 21, 22, 23: first, second, third section of spinning mill
- y1, y2: transportable textile assemblies
- pa, pb: assembly parameters of transportable textile assemblies
- o1, o1', o1": initial locations, other locations of transportable textile assemblies
- o2: locations of transportable textile assemblies
- 1: electronic device
- 12, 13, 19: functions of the electronic device as specified in the description
- i1, i2, i3, i9: signal lines
- 90: room view of spinning mill
- 91: camera

## Claims

1. An electronic device (1) for keeping track of assembly parameters (pa, pb, ...) of transportable textile assemblies (y1, y2, ...) of a spinning mill (20), the electronic device (1) being configured to:
receive parameter data for determining assembly parameters (pa, pb, ...) of transportable textile assemblies (y1, y2, ...) while being arranged at initial locations (o1);
receive image data of a room view (90) of the spinning mill (20) for tracking locations (o1', o1") of transportable textile assemblies (y1, y2, ...) during their transportation for keeping track of assembly parameters (pa, pb, ...) of transportable textile assemblies (y1, y2, ...).

2. The electronic device (1) according to claim 1, wherein assembly parameters (pa, pb, ...) of transportable textile assemblies (y1, y2, ...) relate to one or more of machine parameters of textile machines having produced the transportable textile assemblies (y1, y2, ...), quality parameters of textile material, quantity parameters of textile material, environmental parameters of the spinning mill (20), and production date and time.

3. The electronic device (1) according to claim 1 or 2, wherein initial locations (o1) relate to one or more of places of delivery of transportable textile assemblies (y1, y2, ...), and places of production of transportable textile assemblies (y1, y2, ...).

4. The electronic device (1) according to one of claims 1 to 3, wherein image data of a room view (90) of the spinning mill (20) includes one or more of still image data, and movie image data.

5. The electronic device (1) according to one of claims 1 to 4, wherein tracking locations (o1', o1") of transportable textile assemblies (y1, y2, ...) includes analyzing image data of a room view (90) of the spinning mill (20) with computer vision techniques.

6. The electronic device (1) according to one of claims 1 to 5, wherein tracking locations (o1', o1") of transportable textile assemblies (y1, y2, ...) includes tracking individual features of transportable textile assemblies (y1, y2, ...), in particular one or more of a pattern of textile material, a visual code, and a color.

7. The electronic device (1) according to one of claims 1 to 6, wherein tracking locations (o1', o1") of transportable textile assemblies (y1, y2, ...) includes analyzing image data at predetermined time intervals.

8. The electronic device (1) according to one of claims 1 to 7, wherein tracking locations (o1', o1") of transportable textile assemblies (y1, y2, ...) includes analyzing image data essentially continuously.

9. The electronic device (1) according to one of claims 1 to 8, wherein tracking locations (o1', o1") of transportable textile assemblies (y1, y2, ...) includes analyzing image data upon receipt of a trigger signal relating to a transportable textile assembly (y1, y2, ...) being arranged at a predefined location (o1").

10. A distributed computer system for putting into practice an electronic device (1) according to one of claims 1 to 9, the distributed computer system comprising one or more computers, wherein preferably at least one of the one or more computers includes a graphical user interface.

11. A method for keeping track of assembly parameters (pa, pb, ...) of transportable textile assemblies (y1, y2, ...) of a spinning mill (20), wherein the method includes the steps executed by an electronic device (1) or a distributed computer system of:
receiving parameter data for determining assembly parameters (pa, pb, ...) of transportable textile assemblies (y1, y2, ...) while being arranged at initial locations (o1);
receiving image data of a room view (90) of the spinning mill (20) for tracking locations (o1', o1") of transportable textile assemblies (y1, y2, ...) during their transportation for keeping track of assembly parameters (pa, pb, ...) of transportable textile assemblies (y1, y2, ...).

12. The method according to claim 11, wherein assembly parameters (pa, pb, ...) of transportable textile assemblies (y1, y2, ...) relate to one or more of machine parameters of textile machines having produced the transportable textile assemblies (y1, y2, ...), quality parameters of textile material, quantity parameters of textile material, environmental parameters of the spinning mill (20), and production date and time.

13. The method according to claim 11 or 12, wherein initial locations (o1) relate to one or more of places of delivery of transportable textile assemblies (y1, y2, ...), and places of production of transportable textile assemblies (y1, y2, ...).

14. The method according to one of claims 11 to 13, wherein image data of a room view (90) of the spinning mill (20) includes one or more of still image data, and movie image data.

15. The method according to one of claims 11 to 14, wherein tracking locations (o1', o1") of transportable textile assemblies (y1, y2, ...) includes analyzing image data of a room view (90) of the spinning mill (20) with computer vision techniques.
